# EUROPÄISCHE PATENTSCHRIFT

(11) **EP 1 899 190 B1**
(45) Veröffentlichungstag und Bekanntmachung des Hinweises auf die Patenterteilung: **17.12.2008**
(21) Anmeldenummer: 06762209.2
(22) Anmeldetag: 27.06.2006
(51) Int. Cl.: B60K 31/04, B60W 30/14, B60W 10/10, B60W 10/06

(54) **VERFAHREN ZUM STEUERN EINES ANTRIEBSSTRANGES EINES FAHRZEUGS MIT EINER ANTRIEBSMASCHINE UND MIT EINEM GETRIEBE**
METHOD FOR CONTROLLING A DRIVE TRAIN OF A VEHICLE, WITH A DRIVE MOTOR AND A GEARBOX
PROCEDE DE COMMANDE D'UN ENSEMBLE TRANSMISSION D'UN VEHICULE A MOTEUR POURVU D'UN MOTEUR D'ENTRAINEMENT ET D'UNE BOITE DE VITESSES

(30) Priorität: 07.07.2005 DE 102005031764
(43) Veröffentlichungstag der Anmeldung: 19.03.2008
(73) Patentinhaber: ZF Friedrichshafen AG, 88038 Friedrichshafen (DE)
(72) Erfinder: MUELLER, Norbert, 88069 Tettnang (DE); SCHULER, Franz-Josef, 88079 Kressbronn (DE); KUHN, Clemens, 88097 Eriskirch (DE)
(86) Internationale Anmeldenummer: PCT/EP2006/006190
(87) Internationale Veröffentlichungsnummer: WO 2007/003305

(56) Entgegenhaltungen:
- EP-A- 1 248 021
- DE-A1- 10 251 563
- DE-A1- 19 632 337
- DE-C1- 10 143 735
- US-A- 4 833 612
- US-A- 5 155 682
- US-A1- 2002 069 010
- US-A1- 2005 125 137

## Beschreibung

Die Erfindung betrifft ein Verfahren zum Steuern eines Antriebsstranges eines Fahrzeugs mit einer Antriebsmaschine und mit einem Getriebe, dessen Übersetzung innerhalb eines Übersetzungsbereiches automatisch stufenlos und/oder gestuft variierbar ist, in Abhängigkeit vorgebbarer und über eine Fahrzeuggeschwindigkeitsregelung einstellbaren Ziel-Geschwindigkeiten des Fahrzeugs und aktueller auf eine Fahrzeuglängsachse bezogene Fahrzeugneigungen gemäß dem Oberbegriff des Anspruchs 1, vgl. EP-A-1248021 oder DE 102 51 563 A.

Aus der Praxis bekannte Fahrzeuge sind zur Erhöhung eines Fahrkomforts mit sogenannten Fahrgeschwindigkeitsregelungen ausgeführt, mittels welchen in Abhängigkeit einer fahrerseitigen Wunschvorgabe ein bestimmter Geschwindigkeitswert der Fahrzeuggeschwindigkeit während des Fahrbetriebs des Fahrzeugs ohne fahrerseitige Betätigung eines Fahrpedals automatisch eingestellt und auch bei veränderten Betriebsbedingungen des Fahrzeugs gehalten wird. Dabei ist es bei bekannten Systemen vorgesehen, den eingestellten Geschwindigkeitswert bzw. die angeforderte Ziel-Geschwindigkeit des Fahrzeugs durch Variieren eines Antriebsmomentes einer Antriebsmaschine des Fahrzeugs durch eine entsprechende Vorgabe an eine Motorsteuerung sowie durch eine entsprechende Ansteuerung einer Bremssteuerung einer Bremsanlage des Fahrzeugs zu erreichen.

Des Weiteren ist es vorgesehen, dass bei einer fahrerseitigen Betätigung des Bremspedals oder des Fahrpedals die Fahrgeschwindigkeitsregelung beendet wird, wobei der Fahrer die Fahrgeschwindigkeitsregelung über eine entsprechende Anforderungseinrichtung - beispielsweise durch Knopfdruck - wieder aktivieren und den vor der Betätigung des Bremspedals oder des Gaspedals eingestellten Wert der Ziel-Geschwindigkeit über die Fahrgeschwindigkeitsregelung wieder automatisch einstellen lassen kann.

Zusätzlich sind zu einer weiteren Verbesserung des Fahrkomforts sogenannte adaptive Fahrgeschwindigkeitsregelungen entwickelt worden, über welche neben einer automatischen Geschwindigkeitsregelung auch eine Abstandsregelung durchführbar ist. Derartige adaptive Fahrgeschwindigkeitsregelungen steuern das System Fahrzeug derart, dass das Fahrzeug automatisch abgebremst wird, wenn beispielsweise ein bestimmter fahrgeschwindigkeitsabhängiger Abstand zu einem vorausfahrenden Objekt unterschritten wird oder eine angeforderte Ziel-Fahrgeschwindigkeit während einer Bergabfahrt des Fahrzeugs überschritten wird. Wird nach dem Eingriff der adaptiven Fahrgeschwindigkeitsregelung erkannt, dass der angeforderte Abstandswert wieder hergestellt ist oder die angeforderte Ziel-Geschwindigkeit des Fahrzeugs wieder erreicht ist, wird der ursprünglich angeforderte Betriebszustand des Fahrzeugs wieder hergestellt, wobei das Fahrzeug unter Umständen auch durch entsprechende Ansteuerung der Antriebsmaschine auf die angeforderte Ziel-Geschwindigkeit beschleunigt werden kann.

Zur Unterstützung einer Fahrgeschwindigkeitsregelung oder einer adaptiven Fahrgeschwindigkeitsregelung werden bei erkannter Bergabfahrt des Fahrzeugs Sonderfahrprogramme mit speziell auf eine Bergabfahrt abgestimmten Schaltkennlinien gestartet, um am Abtrieb des Antriebsstranges des Fahrzeugs ein antriebsmaschinenseitiges Brems- bzw. Schubmoment darstellen zu können, womit eine Bremsanlage des Fahrzeugs bei längeren Bergabfahrten entlastet werden kann.

Aus der DE 28 52 195 A1 ist eine Steuervorrichtung für ein selbsttätig schaltendes Getriebe bekannt, mittels welcher eine Fahrstrategie bei einer Bergfahrt durch eine Bergerkennung unterstützt wird. Diese Bergerkennung wird auch während einer aktivierten Fahrgeschwindigkeitsregelung bzw. während eines Tempomatgetriebes genutzt, um beispielsweise bei einer Bergauffahrt das Getriebe über Schaltkennlinien anzusteuern, welche eine Hochschaltung erst bei höheren Drehzahlen der Antriebsmaschine anfordern als in der Ebene und mittels der größere Hysteresen zwischen Hoch- und Rückschaltkennlinien eingestellt werden.

Aus der DE 40 37 248 A1 ist zur Unterstützung einer Fahrzeuggeschwindigkeitsregelung bekannt, im Getriebe wenigstens eine Rückschaltung in Richtung eines kleineren Getriebeganges und/oder das Schließen einer Wandlerkupplung während einer Bergfahrt auszulösen, um den jeweils für die Fahrgeschwindigkeitsregelung geeigneten Gang eines Getriebes auszuwählen.

Den beiden letztgenannten aus dem Stand der Technik bekannten Vorgehensweisen liegt jedoch der Nachteil zugrunde, dass die Verfahren nur in unzureichendem Umfang auf unterschiedliche Steigungswerte und veränderte Fahrzeugbeladungen abstimmbar sind und daher eine Fahrgeschwindigkeitsregelung nicht in dem für einen hohen Fahrkomfort erforderlichen Umfang unterstützen.

Das bedeutet, dass bekannte Bergaberkennungen während einer Bergabfahrt eines Fahrzeugs bei gleichzeitig aktiver Fahrgeschwindigkeitsregelung bzw. bei gleichzeitig aktiver adaptiver Fahrgeschwindigkeitsregelung nicht die erwünschte Funktionalität zur Verfügung stellen, da die durch wechselnde Fahrzeugbeladungen und die sich ständig ändernden Fahrprofile variierenden Betriebszustände des Fahrzeugs nicht über eine Applikation der Schaltkennlinien eines Getriebes abgedeckt werden können und ein Fahrer im Betrieb eines Fahrzeugs oftmals gezwungen ist, Abweichungen von der angeforderten Ziel-Geschwindigkeit durch manuelles Eingreifen, wie durch eine Betätigung eines Fahrpedals oder Bremspedals, entsprechend entgegenzuwirken.

Dabei ist jedoch von Nachteil, dass die Fahrgeschwindigkeitsregelung bei einer Betätigung des Bremspedals oder des Fahrpedals sofort deaktiviert wird. Möchte der Fahrer den Ausstieg aus der Fahrgeschwindigkeitsregelung verhindern, so bleibt nur der manuelle Eingriff über Begrenzungspositionen oder ein Wechsel in ein Tipfahrprogramm, wobei der Fahrer auf Veränderungen des Gefälles entweder mit Rückschalt- oder mit Hochschaltanforderungen reagieren muss, um die angeforderte Ziel-Geschwindigkeit des Fahrzeugs einstellen zu können.

Der vorliegenden Erfindung liegt daher die Aufgabe zugrunde, ein Verfahren zum Steuern eines Antriebsstranges eines Fahrzeugs mit einer Antriebsmaschine und mit einem Getriebe zur Verfügung zu stellen, mittels dem eine Ziel-Geschwindigkeit des Fahrzeugs bei aktiver Fahrgeschwindigkeitsregelung während einer Bergfahrt ohne fahrerseitige manuelle Eingriffe auch bei wechselnden Betriebszuständen einstellbar bzw. haltbar ist.

Erfindungsgemäß wird diese Aufgabe mit einem Verfahren zum Steuern eines Antriebsstranges eines Fahrzeugs mit einer Antriebsmaschine und mit einem Getriebe mit den Merkmalen des Patentanspruches 1 gelöst.

Während des erfindungsgemäßen Verfahrens wird ein Antriebsstrang eines Fahrzeugs mit einer Antriebsmaschine und mit einem Getriebe, dessen Übersetzung innerhalb eines Übersetzungsbereichs automatisch stufenlos und/oder gestuft variierbar ist, in Abhängigkeit vorgebbarer und über eine Fahrgeschwindigkeitsregelung vorgebbare Ziel-Geschwindigkeiten des Fahrzeugs und aktueller auf eine Fahrzeuglängsachse bezogene Fahrzeugneigungen angesteuert, wobei bei aktivierter Fahrgeschwindigkeitsregelung und einer Abweichung der Ist-Geschwindigkeit des Fahrzeugs von einer vorgegebenen Ziel-Geschwindigkeit des Fahrzeugs eine Anforderung zum Verändern einer aktuellen Übersetzung des Getriebes generiert wird, wenn ermittelt wird, dass das mit der Ist-Übersetzung des Getriebes am Abtrieb des Antriebsstranges darstellbare Abtriebsmoment kleiner als ein Schwellwert oder kleiner als ein zum Einstellen der vorgegebenen Ziel-Geschwindigkeit des Fahrzeugs erforderliches abtriebsseitiges Abtriebsmoment ist, wobei die Übersetzung des Getriebe derart variiert wird, dass das am Abtrieb darstellbare Abtriebsmoment in Richtung des zum Einstellen der Ziel-Geschwindigkeit des Fahrzeugs erforderlichen Abtriebsmomentes verändert wird. Nach einer Vergrößerung der Übersetzung (i_ist) des Getriebes wird ein erster Timer (TIMER1) gestartet, bis zu dessen Ablauf eine weitere Veränderung der Übersetzung (i_ist) verhindert wird. Wahrend des aktivierten ersten Timers (TIMER1) wird eine gefilterte ist-Beschleunigung des Fahrzeugs ermittelt und ausgewertet, wobei eine weitere Vergrößerung der Übersetzung (i_ist) des Getriebes unterbleibt, wenn festgestellt wird, dass sich die Ist-Geschwindigkeit (v_ist) des Fahrzeugs nach der Vergrößerung der Übersetzung (i_ist) in Richtung der Zielgeschwindig- keit (v_ziel) verändert.

Somit wird bei dem erfindungsgemäßen Verfahren sowohl eine Abweichung der Ist-Geschwindigkeit des Fahrzeugs von einer vorgegebenen Ziel-Geschwindigkeit des Fahrzeugs sowie ein am Abtrieb aktuell darstellbares Abtriebsmoment überwacht und einer Abweichung von der Ziel-Geschwindigkeit des Fahrzeugs durch eine Veränderung der Ist-Übersetzung des Getriebes dadurch entgegengewirkt, dass beispielsweise bei einem Überschreiten der Ziel-Geschwindigkeit des Fahrzeugs während einer Bergabfahrt die Übersetzung des Getriebes derart vergrößert wird, dass das am Abtrieb darstellbare Abtriebsmoment in Richtung des zum Einstellen der Ziel-Geschwindigkeit des Fahrzeugs erforderlichen Abtriebsmomentes verändert wird.

Durch die erfindungsgemäße Vorgehensweise besteht vorteilhafterweise im Vergleich zu herkömmlichen Verfahren die Möglichkeit, die Übersetzung des Getriebes über alle Betriebsbereiche des Fahrzeugs an den jeweilig vorliegenden Betriebszustand, d. h. an die aktuell vorliegende Fahrzeugneigung, die aktuelle Fahrzeugbeladung und die über die Fahrzeuggeschwindigkeitsregelung angeforderte Ziel-Geschwindigkeit des Fahrzeugs angepasst einzustellen, womit manuelle Eingriffe eines Fahrer zur Einhaltung der vorgegebenen Ziel-Geschwindigkeit des Fahrzeugs auf einfache Art und Weise vermieden werden und langwierige und kostenintensive Applikationen wie bei herkömmlich betriebenen Getrieben nicht erforderlich sind.

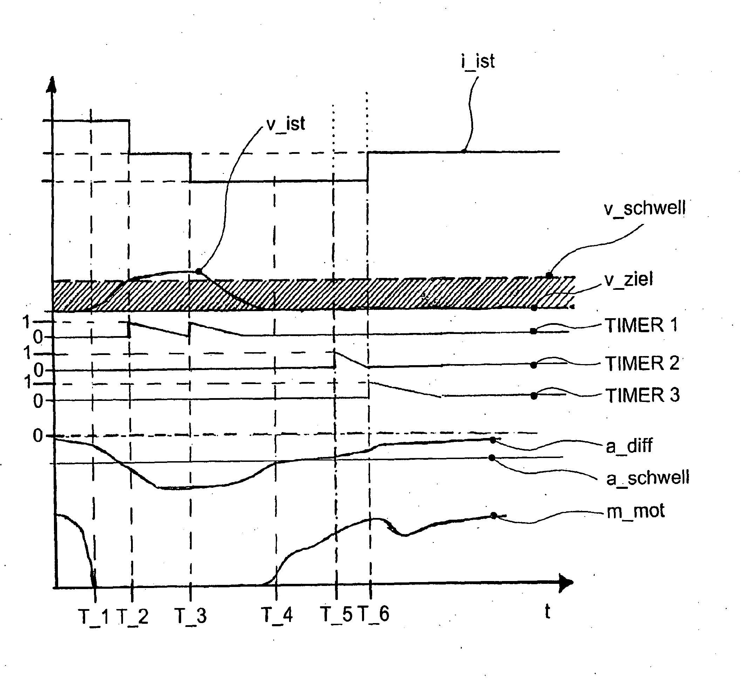

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Die einzige Figur der Zeichnung zeigt mehrere miteinander korrespondierende Verläufe von Betriebszustandsparametern eines Fahrzeugs und weiteren während der Durchführung des erfindungsgemäßen Verfahrens verwendeter Betriebsgrößen über der Zeit während eines exemplarischen Betriebszustandsverlaufes des Fahrzeugs, die sich bei einer erfindungsgemäßen Ansteuerung eines Automatgetriebes einstellen, wobei im Sinne der hier vorliegenden Erfindung unter dem Begriff Automatgetriebe alle Getriebe mit einem automatischen Gangwechsel verstanden werden, die als Stufenautomatgetriebe oder als stufenlose Automatgetriebe bezeichnet werden. Hierzu gehören z. B. das Doppelkupplungsgetriebe, das vollautomatisierte Klauen- oder Synchrongetriebe, konventionelle, vollautomatisierte Schaltgetriebe, sogenannte CVT-Getriebe sowie Kombinationen hiervon.

In der Figur sind mehrere Verläufe von Betriebszustandsparametern eines Fahrzeugs sowie weiterer Betriebsgrößen bzw. Kennwerte übereinander dargestellt, welche miteinander korrespondieren und die sich während eines Betriebszustandsverlaufes eines Fahrzeugs bei aktivierter Fahrgeschwindigkeitsregelung während einer Bergabfahrt eines Fahrzeugs mit sich veränderndem Gefälle bzw. mit sich verändernder Fahrzeugneigung einstellen.

Vor einem Zeitpunkt T_0 ist im Getriebe, welches vorliegend ein 6-Gang-StufenAutomatgetriebes ist, die sechste Vorwärtsfahrtstufe als Ist-Übersetzung i_ist eingelegt. Eine aktuelle Ist-Geschwindigkeit i_ist des Fahrzeugs entspricht im Wesentlichen einer fahrerseitig vorgegebenen Ziel-Geschwindigkeit v_ziel des Fahrzeugs, welche von einer Fahrgeschwindigkeitsregelung eingestellt bzw. gehalten wird.

Ein Motormoment m_mot einer Antriebsmaschine des Antriebsstranges des betrachteten Fahrzeugs wird in der dargestellten Weise von der Fahrgeschwindigkeitsregelung bzw. der damit gekoppelten Motorsteuerung abgesenkt, um die Ist-Geschwindigkeit v_ist des Fahrzeugs durch Darstellung eines entsprechenden Motorbremsmomentes am Abtrieb des Fahrzeugs auf dem vorgegebenen Wert der Ziel-Geschwindigkeit v_ziel des Fahrzeugs zu halten.

Ein weiterer Verlauf einer Differenzfahrzeugbeschleunigung a_diff weist trotz der erheblichen Herabsetzung des Motormomentes m_mot der Antriebsmaschine noch eine leichte Veränderung in Richtung eines Schwellwertes a_schwell auf. Die Antriebsmaschine stellt durch die Verringerung des Motormomentes m_mot in Verbindung mit der aktuell eingestellten Übersetzung i_ist am Abtrieb ein Schubmoment bzw. Antriebsmoment zur Verfügung, bei dem die Beschleunigung des Fahrzeugs nur geringfügig zunimmt und die Ist-Geschwindigkeit v_ist des Fahrzeugs im Wesentlichen der Ziel-Geschwindigkeit des Fahrzeugs entspricht. Die Differenzfahrzeugbeschleunigung a_diff entspricht jeweils einer Differenz aus einer anhand eines aktuellen Antriebsmomentes der Antriebsmaschine ermittelten Soll-Beschleunigung des Fahrzeugs und einer aktuell ermittelten Ist-Beschleunigung des Fahrzeugs, wobei an dieser Stelle sowohl die aktuelle Steigung als auch ein aktueller Beladungszustand des Fahrzeugs auf einfache Art und Weise berücksichtigt werden.

Alternativ hierzu kann es auch vorgesehen sein, dass die aktuelle Fahrbahnneigung bzw. die Fahrzeugneigung mittels eines Neigungssensors ermittelt und für die Ansteuerung des Antriebsstranges herangezogen wird, wobei bei dieser Vorgehensweise eine aktuelle Fahrzeugbeladung über andere geeignete Maßnahmen zu ermitteln ist.

Zum Zeitpunkt T_1 zu dem das Motormoment m_mot seinen kleinsten Wert annimmt und am Abtrieb das mit der aktuell im Getriebe eingelegten Ist-Übersetzung i_ist des Getriebes größtmöglich darstellbare Schubmoment anliegt, beginnt die Ist-Geschwindigkeit v_ist des Fahrzeugs zunehmend von der Ziel-Geschwindigkeit v_ziel des Fahrzeugs abzuweichen. Das bedeutet, dass über das am Abtrieb des Fahrzeugs anliegende und über die Ist-Übersetzung i_ist des Getriebes entsprechend gewandelte Motorbremsmoment der Antriebsmaschine nicht dem Abtriebsmoment entspricht, welches zum Einstellen der Ziel-Geschwindigkeit des Fahrzeugs erforderlich ist.

Deshalb wird zum Zeitpunkt T_2, zu dem die Ist-Geschwindigkeit v_ist des Fahrzeugs einen Schwellwert v_scliwell der Fahrzeuggeschwindigkeit überschreitet, welcher oberhalb der angeforderten Ziel-Geschwindigkeit v_ziel der Fahrzeuggeschwindigkeit liegt, die Übersetzung i_ist des Getriebes durch eine Rückschaltung verkleinert.

Die Anforderung für die Rückschaltung im Getriebe zum Zeitpunkt T_2 erfolgt deshalb, weil durch das maximale Absenken des Motormomentes m_mot und das Überschreiten des abtriebsdrehzahlabhängigen und übersetzungsabhängigen Schwellwertes v_schwell der Fahrzeuggeschwindigkeit bei gleichzeitigem Unterschreiten eines applizierten Schwellwertes a_schwell der Differenzfahrzeugbeschleunigung a_diff erkannt wird, dass die antriebsmaschinenseitige Motorbremswirkung für das aktuelle Berggefälle nicht mehr ausreichend ist, um die angeforderte Ziel-Geschwindigkeit v_ziel des Fahrzeugs einstellen bzw. halten zu können.

Alternativ hierzu kann es auch vorgesehen sein, dass die Rückschaltung bereits dann angefordert wird, wenn das Abtriebmoment bzw. das Motormoment einen vordefinierten Schwellwert unterschreitet, der kleiner als das maximal mit der aktuellen Ist-Übersetzung am Abtrieb einstellbare Abtriebsmoment ist.

Gleichzeitig wird zum Zeitpunkt T_2 ein erster Timer TIMER1 gestartet, bis zu dessen Ablauf eine weitere Veränderung der Übersetzung i_ist des Getriebes verhindert wird. Das bedeutet, dass während des aktivierten ersten Timers TIMER1 weder eine Hoch- noch eine Rückschaltung im Getriebe durchgeführt wird. Zusätzlich wird während des aktivierten ersten Timers TIMER1 eine gefilterte Ist-Beschleunigung des Fahrzeugs ermittelt und ausgewertet, wobei eine weitere Rückschaltung bzw. weitere Vergrößerung der Ist-Übersetzung i_ist des Getriebes unterbleibt, wenn festgestellt wird, dass sich die Ist-Geschwindigkeit v_ist des Fahrzeugs nach der Rückschaltung der Übersetzung in Richtung der angeforderten Ziel-Geschwindigkeit v_ziel verändert.

Die Ist-Beschleunigung des Fahrzeugs wird vorliegend aus der Abtriebsdrehzahl des Fahrzeugs berechnet und anschließend über einen Mittelwertfilter gefiltert, um Unstetigkeiten des Abtriebsdrehzahlsensorsignals mit einer derartigen Trägheit auszuwerten, dass die Ansteuerung des Getriebes durch die auftretenden Unstetigkeiten im Verlauf der Ist-Beschleunigung nicht negativ beeinflusst wird.

Durch die während des aktiven ersten Timers TIMER1 vorliegende Schaltverhinderung werden unmittelbar sich an die Rückschaltung anschließende weitere Rückschaltungen vermieden, die zum Einstellen der Ziel-Geschwindigkeit des Fahrzeugs unter Umständen nicht erforderlich sind und gegebenenfalls sich wiederum daran anschließende Hochschaltungen zur Folge haben. Derartige aus dem Stand der Technik bekannte Betriebszustandsverläufe, die als Pendelschaltungen bezeichnet werden, beeinträchtigen einen Fahrkomfort in unerwünschtem Umfang.

Deshalb wird dem System Fahrzeug nach der Rückschaltung durch die Aktivierung des ersten Timers TIMER1 zunächst Zeit gegeben, das am Abtrieb des Fahrzeugs anliegende Motorbremsmoment zu erhöhen und der durch das Gefälle am Fahrzeug angreifenden Hangabtriebskraft entsprechend entgegenwirken zu können.

Zu einem Zeitpunkt T_3, zu dem der erste Timer TIMER1 abgelaufen ist, wird vorliegend eine weitere Vergrößerung der Ist-Übersetzung i_ist des Getriebes bzw. eine weitere Rückschaltung angefordert, da bei aktivierter Fahrgeschwindigkeitsregelung eine Abweichung der Ist-Geschwindigkeit v_ist von der vorgegebenen bzw. angeforderten Ziel-Geschwindigkeit v_ziel des Fahrzeugs ermittelt wird, die größer als der Schwellwert v_schwell der Fahrzeuggeschwindigkeit ist. Bei einer derartigen Abweichung der Ist-Geschwindigkeit v_ist des Fahrzeugs von der Ziel-Geschwindigkeit v_ziel wird ermittelt, dass das mit der Ist-Übersetzung i_ist des Getriebes am Abtrieb des Abtriebsstranges darstellbare Abtriebsmoment kleiner als ein zum Einstellen der vorgegebenen Ziel-Geschwindigkeit v_ziel erforderliches abtriebsseitiges Antriebsmoment ist, wenn die während des aktiven ersten Timers TIMER1 ausgewertete gefilterte Ist-Beschleunigung des Fahrzeugs größer als ein applizierter Schwellwert ist.

Da zum Zeitpunkt T_3 alle vorgenannten Bedingungen erfüllt sind, erfolgt eine zweite Rückschaltung ausgehend von der fünften Vorwärtsfahrtstufe des Getriebes in seine vierte Vorwärtsfahrtstufe, wobei zum Rückschaltzeitpunkt T_3 der erste Timer TIMER1 erneut gestartet wird.

Aufgrund der erneuten Rückschaltung im Getriebe sinkt die Ist-Geschwindigkeit v_ist des Fahrzeugs unterhalb des Schwellwertes v_schwell der Fahrzeuggeschwindigkeit in Richtung der angeforderten Ziel-Geschwindigkeit v_ziel des Fahrzeugs ab, während die Differenzfahrzeugbeschleunigung a_diff, welche einer berechneten Bergkennzahl entspricht und zu einer aktuellen Fahrzeugneigung unter Berücksichtigung eines aktuellen Beladungszustandes des Fahrzeugs äquivalent ist, bei gleich bleibendem Motormoment m_mot einen leichten Anstieg in Richtung des Schwellwertes a_schwell der Differenzfahrzeugbeschleunigung aufweist. Der leichte Anstieg des Verlaufs der Fahrzeugdifferenzbeschleunigung a_diff weist darauf hin, dass nach der zweiten Rückschaltung am Abtrieb des Fahrzeugs ein größeres Schubmoment anliegt. Zudem wird durch das Angleichen der Ist-Geschwindigkeit v_ist an die Ziel-Geschwindigkeit v_ziel nach Ablauf des ersten Timers TIMER1 keine weitere Rückschaltung im Getriebe angefordert.

Zum Zeitpunkt T_4 wird das Motormoment m_mot wieder angehoben, um die Ist-Geschwindigkeit v_ist auf dem Wert der Ziel-Geschwindigkeit v_ziel zu halten. Da der Verlauf der Differenzfahrzeugbeschleunigung a_diff sich im Wesentlichen aufgrund eines geringeren Gefälles auf einem niedrigeren Niveau befindet, muss das Motormoment m_mot in der dargestellten Art und Weise zunehmend angehoben werden, um die Ist-Geschwindigkeit v_ist auf dem Wert der Ziel-Geschwindigkeit v_ziel zu halten.

Ein derartiger Betriebszustandsverlauf führt zum Zeitpunkt T_5 zur Aktivierung eines zweiten Timers TIMER2, während dem überprüft wird, ob das Motormoment m_mot dauerhaft größer als ein gangabhängiges applizierbares Kennfeld, welches in Abhängigkeit der Abtriebsdrehzahl des Fahrzeugs sowie der Fahrzeugdifferenzbeschleunigung a_diff variiert, ist. Diese Abfrage wird vorliegend zum Zeitpunkt T_6, zu dem der zweite Timer TIMER2 abläuft, positiv beantwortet, weshalb im Getriebe eine Hochschaltung ausgehend von der vierten Vorwärtsfahrstufe in die fünfte Vorwärtsfahrstufe angefordert und durchgeführt wird. Anschließend wird das Motormoment m_mot in der in der Figur dargestellten Art und Weise derart gesteuert eingestellt, dass die Ist-Geschwindigkeit v_ist des Fahrzeugs weiterhin der Ziel-Geschwindigkeit v_ziel des Fahrzeugs entspricht.

Um eine sich an die Hochschaltung zum Zeitpunkt T_6 sofort anschließende weitere Hochschaltung zu vermeiden, wird zum Zeitpunkt T_6 ein dritter Timer TIMER3 gestartet, während dem eine Veränderung der Übersetzung des Getriebes verhindert wird. Das bedeutet, dass erst nach Ablauf des dritten Timers TIMER3 eine weitere Hochschaltung durchführbar ist, wenn die dafür vorgesehenen Bedingungen erfüllt sind.

Mit dieser Vorgehensweise wird im Getriebe ein sequentielles Hochschalten durchgeführt, um auf leichte und stärkere Fahrprofiländerungen durch eine Einzelschaltung oder durch aufeinander folgende Mehrfachschaltungen in einem für die Einhaltung der vorgegebenen Ziel-Geschwindigkeit v_ziel des Fahrzeugs entsprechenden Umfang reagieren zu können.

Alternativ zu der Betrachtung des aktuellen Motormomentes der Antriebsmaschine besteht auch die Möglichkeit, einen von der Motorsteuerung vorgegebenen virtuellen Fahrpedalwert zu überwachen, da dieser äquivalent zum aktuell eingestellten Motormoment ist. Der virtuelle Fahrpedalwert wird zur Einstellung des Motormomentes verwendet, da bei aktivierter Fahrgeschwindigkeitsregelung eine fahrerseitige Betätigung des Fahrpedals unterbleibt und von dieser Stelle keine entsprechende Anforderung zum Einstellen des Motormomentes an der Antriebsmaschine des Fahrzeugs anliegt.

Bei dem erfindungsgemäßen Verfahren wird bei einem erkannten Bergabfahren und einem Überschreiten einer applizierbaren Geschwindigkeitshysterese, welche vorliegend betragsmäßig der Differenz zwischen dem Schwellwert v_schwell der Fahrzeuggeschwindigkeit und der angeforderten Ziel-Geschwindigkeit v_ziel des Fahrzeugs entspricht, im Getriebe unabhängig von in einer Getriebesteuerung hinterlegten Fahr- bzw. Schaltprogrammen eine Veränderung der Übersetzung des Getriebes, d. h. entweder eine Rückschaltung oder eine Hochschaltung angefordert, um die Ist-Geschwindigkeit v_ist des Fahrzeugs in Richtung der angeforderten Ziel-Geschwindigkeit v_ziel in einer an den aktuellen Betriebszustand des Fahrzeugs optimal angepassten Art und Weise einzustellen bzw. einzuregeln, wenn das am Abtrieb mit der aktuell im Getriebe eingelegten Ist-Übersetzung i_ist am Abtrieb darstellbare Abtriebsmoment nicht mit dem zur Einstellung der angeforderten Ziel-Geschwindigkeit v_ziel erforderlichen Abtriebsmoment in Deckung bringbar ist bzw. auf diesem Wert oder einen applizierten Schwellwert des Abtriebsmomentes einstellbar ist.

Um sicherzustellen, dass die Übersetzung des Getriebes nicht in einer den Fahrkomfort beeinträchtigenden Art und Weise verändert wird, oder ein zu niedriger Gang zu lange gehalten wird, wird bei dem Verfahren nach der Erfindung überprüft, ob in den Ablauf zum automatischen Anfordern einer Rückschaltung bei aktivierter Fahrgeschwindigkeitsregelung eingestiegen wird.

Dabei ist vorgesehen, dass der Einstieg erst dann erfolgt, wenn erkannt wird, das die Differenzfahrzeugbeschleunigung a_diff kleiner als der Schwellwert a_schwell ist, das Motormoment m_mot oder der virtuelle Fahrpedalwert kleiner als eine applizierte Schwelle ist und die Ist-Geschwindigkeit v_ist größer als die Ziel-Geschwindigkeit v_ziel plus eine abtriebsdrehzahlabhängige und übersetzungsabhängige applizierbare Hysterese bzw. größer als der Schwellwert v_schwell ist. Sind die vorgenannten Bedingungen erfüllt, wird erfindungsgemäß eine Rückschaltung angefordert. Gleichzeitig wird der erste Timer TIMER1 gestartet, während dem neben einer Hochschaltverhinderung auch eine eventuell angeforderte weitere Rückschaltung verhindert wird.

Erst nach Ablauf des ersten Timers TIMER1 und bei gleichzeitiger Erfüllung der vorgenannten Einstiegsbedingungen wird eine weitere Rückschaltung im Getriebe angefordert und durchgeführt, wobei anschließend wiederum durch den erneut aktivierten ersten Timer TIMER1 die zeitlich begrenzten Schaltverhinderungen aktiviert sind.

Ist das Motormoment m_mot bzw. der virtuelle Fahrpedalwert dauerhaft größer eines gangabhängig applizierten Kennfeldes, wird die Übersetzung des Getriebes durch eine sequentielle Hochschaltroutine solange verkleinert, bis das System Fahrzeug an die aktuelle Fahrprofiländerung derart angepasst ist, dass die angeforderte Ziel-Geschwindigkeit v_ziel durch eine möglichst verbrauchsgünstige Befeuerung des Motors von der Fahrgeschwindigkeitsregelung gehalten werden kann.

Zudem besteht durch die Auswertung der gefilterten Fahrzeugbeschleunigung die Möglichkeit, bei Vorliegen einer positiven Fahrzeugbeschleunigung und eines Motormoments größer als der Schwellwert eine Hochschaltverhinderung zu aktivieren und gleichzeitig zu überprüfen, ob im Getriebe eine Rückschaltung durchzuführen ist, um die Ist-Geschwindigkeit v_ist des Fahrzeugs auf dem Niveau der angeforderten Ziel-Geschwindigkeit v_ziel des Fahrzeugs zu halten.

Grundsätzlich wird mit dem erfindungsgemäßen Verfahren verifiziert, ob eine aktuelle Motorbremswirkung nicht mehr ausreichend für das aktuelle Gefälle ist und somit beim Erfüllen der Einstiegsbedingungen und beim Überschreiten der gesetzten Ziel-Geschwindigkeit v_ziel zusätzlich einer applizierbaren Hysterese automatisch eine Rückschaltung im Getriebe durchgeführt. Werden jedoch die Bedingungen für einen Ausstieg aus der erfindungsgemäßen Ansteuerroutine des Getriebes bzw. Antriebsstranges durch ein flacheres Fahrprofil sowie einen Übergang von einem Schubbetrieb in einen Zugbetrieb des Antriebsstranges erfüllt, erfolgt der Ausstieg nicht sofort, sondern erst wenn die Ausstiegsbedingungen dauerhaft erfüllt sind.

Im Getriebe angeforderte Hochschaltungen werden sequentiell durchgeführt, da nach jeder erfolgten Hochschaltung zunächst das Verhalten des Fahrzeugs, welches durch Fahrpedalstellung, Fahrbeschleunigung und dergleichen charakterisiert ist, innerhalb eines applizierbaren Zeitfensters, d. h. vorliegend des dritten Timers TIMER3, nach einer Hochschaltung ausgewertet wird. Anhand dieser Information besteht nunmehr die Möglichkeit, unter weiterer Beachtung anhand der applizierbaren Ausstiegsbedingungen zu entscheiden, ob eine weitere Hochschaltung durchgeführt werden soll, oder ob ein Wiedereinstieg in die Routine für eine automatische Rückschaltung sinnvoll ist.

Das automatische Schalten bei aktivierter Fahrgeschwindigkeitsregelung vervollständigt die Funktionalität eines Tempomatbetriebes eines Fahrzeugs insbesondere während einer Bergabfahrt eines Fahrzeugs, wobei das erfindungsgemäße Verfahren auch zu einer Verbesserung des Fahrkomforts bei Bergübergängen geeignet ist, da mittels des Verfahrens Entscheidungen für Hochschaltungen, für Rückschaltungen oder zum Ganghalten genutzt werden kann.

Die sowohl bei Stufenautomaten, CVT-, Doppelkupplungs-, automatisierten Schaltgetrieben oder dazu ähnlichen Getriebearten anwendbare Fahrstrategie bietet vorteilhafterweise die Möglichkeit, die Gangauswahl besser auf das Verhalten des Fahrzeugs im Tempomatbetrieb abzustimmen und Änderungen des Fahrprofils besser berücksichtigen zu können. Das bedeutet, dass das Getriebe bei stärkerem Gefälle automatisch zurückschaltet, um die vom Fahrer gewählte Geschwindigkeit zu halten, wobei zusätzlich eine automatische Hochschaltung angefordert wird, wenn das Fahrprofil wieder flacher wird.

Zusätzlich besteht bei einer vorteilhaften Variante des erfindungsgemäßen Verfahrens die Möglichkeit, das Getriebe in Abhängigkeit von einer Empfangeinrichtung des Fahrzeugs von einer Sendeeinrichtung zugesendeten Steigungsinformationssignalen über das aktuell vom Fahrzeug befahrene Gelände bzw. über ein zukünftig befahrenes Gelände anzusteuern, so dass beispielsweise ein automatisches Einlegen eines kleineren Ganges bei gefährlichem Gefälle erfolgt. Dabei können dem Fahrzeug derartige Informationen von einem GPS-System übermittelt werden.

Zusätzlich oder alternativ hierzu kann es auch vorgesehen sein, dass die erfindungsgemäße Steuerung für häufig befahrene Strecken unter Berücksichtigung des jeweils optimalen einzulegenden Ganges adaptiert wird, um eine Fahrgeschwindigkeitsregelung im angestrebten Umfang unterstützen zu können.

Bei einer weiteren vorteilhaften Variante des erfindungsgemäßen Verfahrens ist es bei einem Fahrzeug mit automatischer Geschwindigkeits- und Abstandsregelung vorgesehen, dass dieses System direkt auf den Gangvorschlag für das Getriebe Einfluss nimmt und somit durch eine eventuelle Rückschaltung die Bremsen des Fahrzeugs schont bzw. entlastet.

Des Weiteren besteht auch die Möglichkeit, das vorbeschriebene Verfahren auf weitere Fahrzeugkomponenten zu erweitern, mittels welchen am Abtrieb ein Bremsmoment darstellbar ist. So besteht beispielsweise die Möglichkeit, zur Reduzierung der Ist-Geschwindigkeit eines Hybridfahrzeugs einen Ladebetrieb der Speicherelemente zu aktivieren, um am Abtrieb ein zur Einstellung bzw. Regelung der Ziel-Geschwindigkeit des Fahrzeugs erforderliches Abtriebsmoment einzustellen.

### Bezugszeichen

- a_diff: Differenzfahrzeugbeschleunigung
- a_schwell: Schwellwert der Differenzfahrzeugbeschleunigung
- i_ist: Ist-Übersetzung
- m_mot: Motormoment
- v_ist: Ist-Geschwindigkeit des Fahrzeugs
- v_schwell: Schwellwert der Fahrzeuggeschwindigkeit
- v_ziel: Ziel-Geschwindigkeit des Fahrzeugs
- t: Zeit
- T1 bis T6: diskreter Zeitpunkt

## Patentansprüche

1. Verfahren zum Steuern eines Antriebsstranges eines Fahrzeugs mit einer Antriebsmaschine und mit einem Getriebe, dessen Übersetzung (i_ist) innerhalb eines Übersetzungsbereiches automatisch stufenlos und/oder gestuft variierbar ist, in Abhängigkeit vorgebbarer und über eine Fahrzeuggeschwindigkeitsregelung einstellbaren Ziel-Geschwindigkeiten (v_ziel) und aktueller auf eine Fahrzeuglängsachse bezogene Fahrzeugneigungen,
wobei bei aktivierter Fahrzeuggeschwindigkeitsregelung und einer Abweichung der Ist-Geschwindigkeit (v_ist) des Fahrzeugs von einer vorgegebenen Ziel-Geschwindigkeit (v_ziel) des Fahrzeugs eine Anforderung zum Verändern einer aktuellen Übersetzung (i_ist) des Getriebes generiert wird, wenn ermittelt wird, dass das mit der Ist-Übersetzung (i_ist) des Getriebes am Abtrieb des Antriebsstranges darstellbare Abtriebsmoment kleiner als ein Schwellwert oder kleiner als ein zum Einstellen der vorgegebenen Ziel-Geschwindigkeit (v_ziel) erforderliches abtriebsseitiges Abtriebsmoment ist,
wobei die Übersetzung (i_ist) des Getriebes derart variiert wird, dass das am Abtrieb darstellbare Abtriebsmoment in Richtung des zum Einstellen der Ziel-Geschwindigkeit (v_ziel) erforderlichen Abtriebsmomentes verändert wird,
**dadurch gekennzeichnet,**
**dass** nach einer Vergrößerung der Übersetzung (i_ist) des Getriebes ein erster Timer (TIMER1) gestartet wird, bis zu dessen Ablauf eine weitere Veränderung der Übersetzung (i_ist) verhindert wird,
und **dass** während des aktivierten ersten Timers (TIMER1) eine gefilterte Ist-Beschleunigung des Fahrzeugs ermittelt und ausgewertet wird, wobei eine weitere Vergrößerung der Übersetzung (i_ist) des Getriebes unterbleibt, wenn festgestellt wird, dass sich die Ist-Geschwindigkeit (v_ist) des Fahrzeugs nach der Vergrößerung der Übersetzung (i_ist) in Richtung der Zielgeschwindigkeit (v_ziel) verändert.

2. Verfahren nach Anspruch 1, **dadurch gekennzeichnet, dass** die Anforderung zur Änderung der Übersetzung (i_ist) generiert wird, wenn eine die Fahrzeugneigung charakterisierende Kenngröße (a_diff), welche einer Differenz aus einer anhand eines aktuellen Antriebsmomentes der Antriebsmaschine ermittelten Soll-Beschleunigung des Fahrzeugs und einer Ist-Beschleunigung des Fahrzeugs entspricht, einen Schwellwert (a_schwell) überschreitet.

3. Verfahren nach Anspruch 1 oder 2, **dadurch gekennzeichnet, dass** die Anforderung zur Änderung der Übersetzung (i_ist) erfolgt, wenn die Ist-Geschwindigkeit (v_ist) des Fahrzeugs von der Ziel-Geschwindigkeit (v_ziel) des Fahrzeugs betragsmäßig um mehr als einen vorzugsweise von der angeforderten Übersetzung des Getriebes abhängigen und/oder von einer Drehzahl des Abtriebs des Fahrzeugs abhängigen Schwellwert abweicht.

4. Verfahren nach Anspruch 1, 2 oder 3, **dadurch gekennzeichnet, dass** nach Ablauf des ersten Timers (TIMER1) eine weitere Vergrößerung der Übersetzung (i_ist) angefordert wird, wenn bei aktivierter Fahrzeuggeschwindigkeitsregelung und bei einer Abweichung der Ist-Geschwindigkeit (v_ist) des Fahrzeugs von einer vorgegebenen Ziel-Geschwindigkeit (v_ziel) des Fahrzeugs ermittelt wird, dass das mit der Ist-Übersetzung (i_ist) des Getriebes am Abtrieb des Antriebsstranges darstellbare Abtriebsmoment kleiner als der Schwellwert oder kleiner als ein zum Einstellen der vorgegebenen Ziel-Geschwindigkeit (v_ziel) erforderliches abtriebsseitiges Abtriebsmoment ist und die Fahrzeugneigung oder die Kenngröße (a_diff) der Fahrzeugneigung den jeweils zugeordneten Schwellwert (a_schwell) überschreitet.

5. Verfahren nach Anspruch 4, **dadurch gekennzeichnet, dass** der erste Timer (TIMER1) nach einer weiteren Vergrößerung der Übersetzung (i_ist) erneut gestartet wird.

6. Verfahren nach einem der Ansprüche 1 bis 5, **dadurch gekennzeichnet, dass** bei aktivierter Fahrzeuggeschwindigkeitsregelung und einer Abweichung der Ist-Geschwindigkeit (v_ist) des Fahrzeugs von einer vorgegebenen Ziel-Geschwindigkeit (v_ziel) des Fahrzeugs kleiner als ein Schwellwert (v_schwell) eine Anforderung zum Verkleinern einer aktuellen Übersetzung (i_ist) des Getriebes generiert wird, wenn ermittelt wird, dass das mit der Ist-Übersetzung (i_ist) des Getriebes am Abtrieb des Antriebsstranges darstellbare Abtriebsmoment größer als ein zum Einstellen der vorgegebenen Ziel-Geschwindigkeit (v_ziel) erforderliches abtriebsseitiges Abtriebsmoment oder als ein Schwellwert ist, wobei die Übersetzung (i_ist) des Getriebes derart verkleinert wird, dass das am Abtrieb darstellbare Abtriebsmoment in Richtung des zum Einstellen der Ziel-Geschwindigkeit (v_ziel) erforderlichen Abtriebsmomentes oder in Richtung des applizierten Schwellwertes des Abtriebsmomentes verändert wird.

7. Verfahren nach einem der Ansprüche 1 bis 6, **dadurch gekennzeichnet, dass** das Abtriebsmoment des Fahrzeugs nach einer Veränderung der Übersetzung (i_ist) des Getriebes durch Verändern des Antriebsmomentes der Antriebsmaschine variiert wird.

8. Verfahren nach einem der Ansprüche 1 bis 7, **dadurch gekennzeichnet, dass** bei Überschreiten eines Schwellwerts des Antriebsmomentes der Antriebsmaschine ein zweiter Timer (TIMER2) gestartet wird.

9. Verfahren nach Anspruch 8, **dadurch gekennzeichnet, dass** nach Ablauf des zweiten Timers (TIMER2) eine Verkleinerung der Übersetzung (i_ist) angefordert wird, wenn ermittelt wird, dass das Antriebsmoment während des aktivierten zweiten Timers (TIMER2) dauerhaft größer als ein Schwellwert des Antriebsmomentes ist.

10. Verfahren nach Anspruch 9, **dadurch gekennzeichnet, dass** nach der Verkleinerung der Übersetzung (i_ist) des Getriebes ein dritter Timer (TIMER3) gestartet wird, während dem eine weitere Veränderung der Übersetzung (i_ist) des Getriebes verhindert wird.

11. Verfahren nach Anspruch 10, **dadurch gekennzeichnet, dass** nach Ablauf des dritten Timers (TIMER3) und bei einer Abweichung der Ist-Geschwindigkeit (v_ist) des Fahrzeugs von einer vorgegebenen Ziel-Geschwindigkeit (v_ziel) des Fahrzeugs kleiner als ein Schwellwert eine Anforderung zum Verkleinern einer aktuellen Übersetzung (i_ist) des Getriebes generiert wird, wenn ermittelt wird, dass das mit der Ist-Übersetzung (i_ist) des Getriebes am Abtrieb des Antriebsstranges darstellbare Abtriebsmoment größer als ein zum Einstellen der vorgegebenen Ziel-Geschwindigkeit (v_ziel) des Fahrzeugs erforderliches abtriebsseitiges Abtriebsmoment oder größer als ein Schwellwert des Abtriebsmomentes ist, wobei die Übersetzung (i_ist) des Getriebes derart verkleinert wird, dass das am Abtrieb darstellbare Abtriebsmoment in Richtung des zum Einstellen der Ziel-Geschwindigkeit des Fahrzeugs erforderlichen Abtriebsmomentes oder in Richtung des Schwellwerts des Abtriebsmomentes verändert wird.

12. Verfahren nach einem der Ansprüche 1 bis 11, **dadurch gekennzeichnet, dass** bei Vorliegen einer gefilterten positiven Ist-Beschleunigung und bei Vorliegen eines Abtriebsmomentes größer als ein Schwellwert eine Vergrößerung der Übersetzung (i_ist) verhindert wird und eine Überprüfung durchgeführt wird, ob eine Verkleinerung der Übersetzung (i_ist) erforderlich ist, um eine Ist-Geschwindigkeit (v_ist) des Fahrzeugs des Fahrzeugs in Richtung der Ziel-Geschwindigkeit (v_ziel) zu verändern.

13. Verfahren nach einem der Ansprüche 1 bis 12, **dadurch gekennzeichnet, dass** eine Anforderung zum Verändern der Übersetzung (i_ist) des Getriebes in Abhängigkeit eines von einer Sendeeinrichtung einer Empfangseinrichtung des Fahrzeugs zugesendeten Steigerungsinformationssignals über das aktuell vom Fahrzeug überfahrene Gelände erfolgt.

## Claims

1. Method for controlling the driveline of a vehicle equipped with a driving engine and with a transmission featuring automatic continuous and/or stepped variability of its ratio (i_act) within a range of ratios, dependent on target speeds (v_target) specifiable and adjustable via a vehicle speed control, and dependent on current vehicle inclinations relative to a longitudinal vehicle axis, with activated vehicle speed control and deviation of the actual vehicle speed (v_act) from a specified vehicle target speed (v_target) resulting in a request to change the current actual transmission ratio (i_act) if the output torque realizable with the actual transmission ratio (i_act) on the output of the driveline is determined to be smaller than a threshold value or smaller than an output-end output torque required for adjustment of the specified target speed (v_target), with the transmission ratio (i_act) being varied in such a manner that the output torque realizable on the output is shifted towards the output torque required for adjustment of the target speed (v_target), **characterized in that** after increase of the transmission ratio (i_act) a first Timer (TIMER1) is started preventing any further change in ratio (i_act) before its set time elapses, and that a filtered actual vehicle acceleration is determined and evaluated during activation of the first Timer (TIMER1), with any further increase in transmission ratio (i_act) not taking place if the actual speed (v_act) of the vehicle after the increase in ratio (i_act) is found to shift towards the target speed (v_target).

2. Method according to claim 1, **characterized in that** the request to change the ratio (i_act) is generated if a vehicle-inclination-characteristic parameter (a_diff), which is equivalent to a difference determined between a nominal vehicle acceleration ascertained with the help of a current drive torque of the driving engine and an actual vehicle acceleration, exceeds a threshold value (a_thresh).

3. Method according to claim 1 or 2, **characterized in that** the request to change the ratio (i_act) is generated if the actual vehicle speed (v_act) differs from the target vehicle speed (v_target) by an amount exceeding the threshold value which preferably depends on the requested transmission ratio and/or on a speed of the output of the vehicle.

4. Method according to claim 1 , 2 or 3, **characterized in that** after expiration of the sequence of the first Timer (TIMER1) another increase in ratio (i_act) is requested if during activated vehicle speed control and a deviation of the actual vehicle speed (v_act) from a specified target vehicle speed (v_target) the output torque realizable with the transmission actual ratio (i_act) on the output of the driveline is determined to be smaller than the threshold value or smaller than an output-end output torque required for adjustment of the specified target speed (v_target), and if the vehicle inclination or the parameter (a_diff) of the vehicle inclination exceeds the threshold value (a_thresh) assigned in each case.

5. Method according to claim 4, **characterized in that** the first Timer (TIMER1) is restarted after a further increase in ratio (i_act).

6. Method according to one of the claims 1 thru 5, **characterized in that** activated vehicle speed control and deviation of the actual vehicle speed (v_act) from a specified target vehicle speed (v_target) below a threshold value (v_thresh) results in a request to reduce a current transmission ratio (i_act) if the output torque realizable on the output of the driveline with the actual transmission ratio (i_act) exceeds an output-end output torque required for adjustment of the specified target speed (v_target), or exceeds a threshold value, with the transmission ratio (i_act) being reduced in such a manner that the output torque realizable on the output is shifted towards the output torque required for adjustment of the target speed (v_target) or towards the applied threshold value of the output torque.

7. Method according to one of the claims 1 thru 6, **characterized in that** the output torque of the vehicle after a change in transmission ratio (i_act) is varied through variation of the input torque of the driving engine.

8. Method according to one of the claims 1 thru 7, **characterized in that** if a threshold value of the input torque of the driving machine is exceeded, a second Timer (TIMER2) is started.

9. Method according to claim 8, **characterized in that** after expiration of the sequence of the second Timer (TIMER2) a reduction of the ratio (i_act) will be requested if during activation of the second Timer (TIMER2) the input torque is determined to permanently exceed a threshold value of the input torque.

10. Method according to claim 9, **characterized in that** after reduction of the transmission ratio (i_act) a third Timer (TIMER3) is started to prevent any further change in transmission ratio (i_act) during its activation.

11. Method according to claim 10, **characterized in that** expiration of the sequence of the third Timer (TIMER3) and deviation of the vehicle actual speed (v_act) from a specified vehicle target speed (v_target) below a threshold value results in a request to reduce the actual transmission ratio (i_act) if the output torque realizable with the actual transmission ratio (i_act) on the output of the driveline exeeds an output-end output torque required for adjustment of the specified vehicle target speed (v_target), or exceeds a threshold value of the output torque, with the transmission ratio (i_act) being reduced in such a manner that the output torque realizable on the output is shifted towards the output torque required for adjustment of the vehicle target speed or towards the threshold value of the output torque.

12. Method according to one of the claims 1 thru 11, **characterized in that** the presence of a filtered positive actual acceleration and of an output torque above a threshold value prevents an increase in ratio (i_act) and results in a check whether reduction of the ratio (i_act) is required to shift the actual vehicle speed (v_act) towards the target vehicle speed (v_target).

13. Method according to one of the claims 1 thru 12, **characterized in that** a request to change the transmission ratio (i_act) is made depending on a signal provided by a sender of a receiver of the vehicle and informing about the terrain the vehicle is currently being operated on.

## Revendications

1. Procédé de commande d'une chaîne cinématique d'un véhicule doté d'un moteur d'entraînement et d'une boîte de vitesses, dont le rapport de démultiplication (i_ist) peut être varié automatiquement en continu et/ou par échelons à l'intérieur d'une plage de démultiplication, et cela en fonction de vitesses cible (v_ziel) de consigne et par l'intermédiaire d'un système de réglage de la vitesse du véhicule, et en fonction d'inclinaisons du véhicule actuelles et référées à un axe longitudinal du véhicule, sachant que lorsque le réglage de la vitesse du véhicule est activé et il y a un écart entre la vitesse réelle (v_ist) du véhicule et une vitesse cible de consigne (v_ziel) du véhicule, le système génère une requête de variation d'un rapport de démultiplication actuel (i_ist) de la boîte de vitesses, et cela dès que le système relève que le couple de sortie qui peut être représenté en sortie de la chaîne cinématique par le rapport de démultiplication réel (i_ist) de la boîte de vitesses est inférieur à un seuil ou inférieur à un couple de sortie nécessaire en sortie pour le réglage de la vitesse cible de consigne (v_ziel), sachant que le rapport de démultiplication (i_ist) de la boîte de vitesses est varié de façon à ce que le couple de sortie représentable en sortie est varié en direction du couple de sortie nécessaire pour le réglage de la vitesse cible (v_ziel), **caractérisé en ce que** après une incrémentation du rapport de démultiplication (i_ist) de la boîte de vitesses est démarré un premier microcontrôleur (TIMER1), jusqu'à l'écoulement duquel est inhibée une autre variation du rapport de démultiplication (i_ist), et **en ce que** pendant que le premier microcontrôleur (TIMER1) est activé, est déterminée et évaluée une accélération réelle filtrée du véhicule, sachant que une autre incrémentation du rapport de démultiplication (i_ist) de la boîte de vitesses n'a pas lieu si le système détecte que, après l'incrémentation du rappport de démultiplication (i_Ist), la vitesse réelle (v_ist) du véhicule varie en direction de la vitesse cible (v_ziel).

2. Procédé selon la revendication 1, **caractérisé en ce que** la requête de variation du rapport de démultiplication (i_ist) est générée lorsqu'un paramètre (a_diff) caractérisant l'inclinaison du véhicule, ce paramètre correspondant à une différence entre une accélération de consigne du véhicule - celle-ci étant déterminée à partir d'un couple d'entrée actuel du moteur d'entraînement - et une accélération réelle du véhicule dépasse un seuil (a_schwell).

3. Procédé selon la revendication 1 ou 2, **caractérisé en ce que** la requête de variation du rapport de démultiplication (i_ist) est lancée lorsque la vitesse réelle (v_ist) du véhicule diffère de la vitesse cible (v_ziel) du véhicule d'une valeur supérieure à un seuil dépendant de préférence du rapport de démultiplication demandé de la boîte de vitesses et/ou d'un régime de la sortie du véhicule.

4. Procédé selon la revendication 1, 2 ou 3, **caractérisé en ce que** après l'écoulement du premier microcontrôleur (TIMER1) est demandé une autre incrémentation du rapport de démultiplication (i_ist), lorsque - avec réglage de la vitesse du véhicule activé et en cas d'un écart entre la vitesse réelle (v_ist) du véhicule et une vitesse cible de consigne (v_ziel) du véhicule - le système détermine que le couple de sortie représentable en sortie de la chaîne cinématique par le rapport de démultiplication réel (i_ist) de la boîte de vitesses est inférieur au seuil ou inférieur à un couple de sortie nécessaire pour le réglage de la vitesse cible de consigne (v_ziel), et lorsque l'inclinaison du véhicule ou le paramètre (a_diff) de l'inclinaison du véhicule dépassent le seuil (a_schwell) à chaque fois associé.

5. Procédé selon la revendication 4, **caractérisé en ce que** le premier microcontrôleur (TIMER1) est relancé après une autre incrémentation du rapport de démultiplication (i_ist).

6. Procédé selon une des revendications 1 à 5, **caractérisé en ce que** avec réglage de la vitesse du véhicule activé et en cas d'un écart inférieur à un seuil (v_schnell) entre la vitesse réelle (v_ist) du véhicule et une vitesse cible de consigne (v_ziel) du véhicule le système génère une requête de réduction d'un rapport de démultiplication réel actuel (i_ist) de la boîte de vitesses lorsqu'il détermine que le couple de sortie représentable en sortie de la chaîne cinématique avec le rapport de démultiplication réel (i_ist) de la boîte de vitesses est supérieur à un couple de sortie côté sortie nécessaire pour le réglage de la vitesse cible de consigne (v_ziel) ou à un seuil, sachant que le rapport de démultiplication (i_ist) de la boîte de vitesses est réduit de façon à ce que le couple de sortie représentable en sortie est varié en direction du couple de sortie nécessaire pour le réglage de la vitesse cible (v_ziel) ou en direction du seuil applicable du couple de sortie.

7. Procédé selon une des revendications 1 à 6, **caractérisé en ce que** le couple de sortie du véhicule est varié après une variation du rapport de démultiplication (i_ist) de la boîte de vitesses, et cela par variation du couple d'entrée du moteur d'entraînement.

8. Procédé selon une des revendications 1 à 7, **caractérisé en ce que** en cas de dépassement d'un seuil du couple d'entrée du moteur d'entraînement est lancé un deuxième microcontrôleur (TIMER2).

9. Procédé selon la revendication 8, **caractérisé en ce que** après écoulement du deuxième microcontrôleur (TIMER2) est demandé une réduction du rapport de démultiplication (i_ist), lorsque le système détermine - pendant que le deuxième microcontrôleur (TIMER2) est activé - que le couple d'entrée est durablement supérieur à un seuil du couple d'entrée.

10. Procédé selon la revendication 9, **caractérisé en ce que** après la réduction du rapport de démultiplication (i_ist) de la boîte de vitesses est lancé un troisième microcontrôleur (TIMER3), pendant l'écoulement duquel est inhibée une autre variation du rapport de démultiplication (i_ist) de la boîte de vitesses.

11. Procédé selon la revendication 10, **caractérisé en ce que** après l'écoulement du troisième microcontrôleur (TIMER3) et en cas d'un écart inférieur à un seuil entre la vitesse réelle (v_ist) du véhicule et une vitesse cible de consigne (v_ziel) du véhicule le système génère une requête de réduction d'un rapport de démultiplication réel actuel (i_ist) de la boîte de vitesses lorsqu'il détermine que le couple de sortie représentable en sortie de la chaîne cinématique avec le rapport de démultiplication réel (i_ist) de la boîte de vitesses est supérieur à un couple de sortie côté sortie nécessaire pour le réglage de la vitesse cible de consigne (v_ziel) du véhicule ou supérieur à un seuil du couple de sortie, sachant que le rapport de démultiplication (i_ist) de la boîte de vitesses est réduit de façon à ce que le couple de sortie représentable en sortie est varié en direction du couple de sortie nécessaire pour le réglage de la vitesse cible du véhicule ou en direction du seuil du couple de sortie.

12. Procédé selon une des revendications 1 à 11, **caractérisé en ce que** en présence d'une accélération réelle positive filtrée et en présence d'un couple der sortie supérieur à un seuil est inhibé une incrémentation du rapport de démultiplication (i_ist) et est effectué un contrôle pour déterminer si c'est nécessaire de réduire le rapport de démultiplication (i_ist) pour varier une vitesse réelle (v_ist) du véhicule en direction de la vitesse cible (v_ziel).

13. Procédé selon une des revendications 1 à 12, **caractérisé en ce que** une requête de variation du rapport de démultiplication (i_ist) de la boîte de vitesses est lancée en fonction d'un signal d'information d'incrémentation relatif au terrain parcouru actuellement par le véhicule, ce signal étant envoyé par un appareil d'émission à un appareil récepteur d'un véhicule.
